Europäisches Patentamt

(19) European Patent Office

Office européen des brevets

(11) Numéro de publication: **0 008 838**
**B1**

(12) **FASCICULE DE BREVET EUROPEEN**

(45) Date de publication du fascicule du brevet: **18.12.85**

(51) Int. Cl.⁴: **A 47 J 37/12,** A 47 J 36/06

(21) Numéro de dépôt: **79200492.1**

(22) Date de dépôt: **05.09.79**

(54) **Appareil de cuisson à couvercle.**

(30) Priorité: **13.09.78 BE 870419**

(43) Date de publication de la demande:
**19.03.80 Bulletin 80/06**

(45) Mention de la délivrance du brevet:
**18.12.85 Bulletin 85/51**

(84) Etats contractants désignés:
**BE CH DE FR GB IT NL SE**

(56) Documents cités:
**FR-A- 801 212**
**FR-A-1 517 736**
**FR-A-2 149 708**
**FR-A-2 180 637**
**FR-A-2 368 857**
**FR-E- 94 107**
**GB-A- 828 267**
**JP-U-48 029 653**
**US-A- 143 574**
**US-A-2 438 270**
**US-A-2 603 740**
**US-A-2 612 154**
**US-A-3 801 331**

(73) Titulaire: **Deutsche ITT Industries GmbH**
**Hans-Bunte-Strasse 19 Postfach 840**
**D-7800 Freiburg (DE)**
(84) **DE**

(73) Titulaire: **ITT INDUSTRIES BELGIUM Société**
**Anonyme**
**Avenue Louise 489**
**B-1050 Bruxelles (BE)**
(84) **BE**

(73) Titulaire: **ITT INDUSTRIES INC.**
**320 Park Avenue**
**New York, NY 10022 (US)**
(84) **CH FR GB IT NL SE**

(72) Inventeur: **Colley, Jacques Louis Joseph**
**rue Naniot 274**
**B-4000 Liege (BE)**
Inventeur: **Vrydags, André Pierre Joseph**
**Montagne de Buren 15**
**B-4000 Liege (BE)**

(74) Mandataire: **Rosenoer, Jacques**
**BELL TELEPHONE MANUFACTURING**
**COMPANY S.A. Dépt.des Brevets Francis**
**Wellesplein 1**
**B-2000 Anvers (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention se rapporte à un appareil de cuisson à couvercle, ce dernier étant pourvu d'une partie transparente comportant deux parois en regard disposées dans une ouverture de ce couvercle de manière à obturer cette ouverture.

Un tel hublot a été proposé dans le modèle d'utilité japonais No. 4 829 653 (numero d'enregistrement: 45—71201) montrant une casserole dont le couvercle est constitué par une double paroi transparente, la description indiquant que celle-ci peut n'occuper qu'une partie d'un couvercle métallique. Pour un ustensile de cuisine semblable, le brevet américain No. 2.603.740 montre une réalisation où le couvercle est entièrement transparent et comporte une partie à double paroi. Des portes de fours de cuisine comprenant au moins deux parois transparentes espacées sont également connues, notamment des brevets américains Nos. 2.438.270 et 2.612.154.

D'autre part, dans le brevet français No. 1.517.736 concernant une friteuse domestique, on a proposé un hublot se présentant sous la forme d'un disque plat encastré obliquement dans le couvercle mais il ist supprimé dans une version perfectionnée décrite dans la première addition No. 94.107. Dans une friteuse analogue décrite dans le brevet américain No. 3,801,331, un hublot semblable se présente sous la forme d'un disque présentant une convexité vers le bas. Toutefois, bien qu'il apparaisse effectivement souhaitable de pouvoir observer la cuisson, particulièrement dans les friteuses pourvues d'un couvercle perforé muni d'un filtre à odeurs comme prévu dans les brevets français mentoinnés, des couvercles à hublot ne semblent pas avoir couramment été disponibles sur le marché pendant la dernière décennie et de nombreux essais de laboratoire effectués par la demanderesse n'ont pas abouti, non seulement en ce qui concerne la fiabilité des matières transparentes essayées pour le hublot, celles-ci ne résistant pas aux températures élevées à l'intérieur d'une friteuse ni aux vapeurs d'huile ou de graisse, mais aussi par l'obtention d'une visibilité adéquate.

Le but de l'invention est de réaliser un hublot à double paroi permettant d'obtenir de tels avantages tout en facilitant sa fabrication et son intégration dans le couvercle.

Suivant une première caractéristique de l'invention, la partie transparente présente la forme d'une coquille creuse fermée pourvue d'un rebord continu extérieur à l'enceinte formée par la coquille, ce rebord étant disposé sur la pourtour de la coquille et permettant de fiscer la coquille dans l'ouverture du couvercle.

Suivant une seconde caractéristique de l'invention, la coquille est réalisée par l'assemblage de deux demi-coquilles, chacune fournissant une des aparois et toutes deux étant pourvues d'un rebord extérieur, les deux rebords étant montés face-à-face.

Suivant une troisième caractéristiques de l'invention, le couvercle est surmonté d'un dessus de couvercle, tous deux avec des ouvertures permettant le montage de la coquille en coinçant le rebord entre les bords des ouvertures.

Suivant une quatrième caractéristique de l'invention, tant la cuve que le couvercle de l'appareil sont métalliques et en contact direct sur le rebord de la cuve pour assurer une bonne liaison thermique entre cette dernière et la paroi transparente inférieure de la coquille.

Suivant une cinquième caractéristique de l'invention, les parois transparentes sont réalisées par le moulage des deux demi-coquilles en polyamide 12 de base aliphatique, cycloaliphatique et aromatique, transparent, résistant à la chaleur et aux vapeurs d'huile et de graisse, et sont soudées l'une à l'autre par ultra-sons.

Dans le brevet américain No. 2.612.154 précité, on réalise déjà une unité constituant une fenêtre à double paroi transparente pour une cuisinière électrique mais ceci est obtenu par des cadres extérieurs pourvus de rebords enserrant deux plaques transparentes séparées par un cadre intérieur assurant un espacement entre les deux parois. Une construction quelque peu analogue utilisant deux disques transparents également espacés l'un de l'autre à l'aide d'une rondelle d'épaisseur appropriée, se retrouvait déjà dans le brevet américain No. 143.574 consacré à un hublot circulaire pouvant être vissé dans la paroi d'une chaudière pour permettre d'observer l'intérieur de celle-ci.

Par contre, la coquille moulée à rebords peut être directement montée dans une ouverture du couvercle tandis qu'il s'est avéré possible d'obtenir une bonne visibilité pendant la cuisson et dès la cessation du dégagement initial des vapeurs créées lors de l'immersion des aliments dans la friteuse, le dépôt de buée sur la face inférieure interne du hublot disparaissant progressivement. La température élevée à laquelle il se trouve tant que le couvercle métallique est en contact avec le rebord de la cuve limite la condensation des vapeurs d'eau, de graisse ou d'huile et qui se produira essentiellement lors du refroidissement suivant l'ouverture du couvercle. Par contre, comme pour des double vitres dont les températures sont respectivement proches de celle de la pièce et de celle règnant à l'extérieur, l'air ou les gaz étant plus ou moins en mouvement au-dessus et en-dessous de la coquille, la paroi supérieure reste à une température de l'ordre de 40°C par exemple, c'est-à-dire largement en-dessous de celle de la paroi inférieure et qui est aux environs de 140°C. L'obtention d'un tel résultat ne nécessite pas un vide à l'intérieur de la coquille ou um remplissage par un gaz mauvais conducteur de la chaleur.

Une réalisation détaillée de l'invention sera maintenant décrite en relation avec les dessins accompagnant la description et dans lesquels:

La Fig. 1 représente sous la forme d'une vue éclatée le couvercle d'une friteuse selon l'invention, le dessus de couvercle et les éléments qui leur sont directement associés;

La Fig. 2 représente une vue en plan de la face supérieure du dessus de couvercle;

La Fig. 3 représente une vue en plan de la face inférieure du dessus de couvercle;

La Fig. 4 représente une vue en plan de la face supérieure du couvercle; et

La Fig. 5 représente une vue en couple diamétrale de l'assemblage du couvercle et du dessus de couvercle.

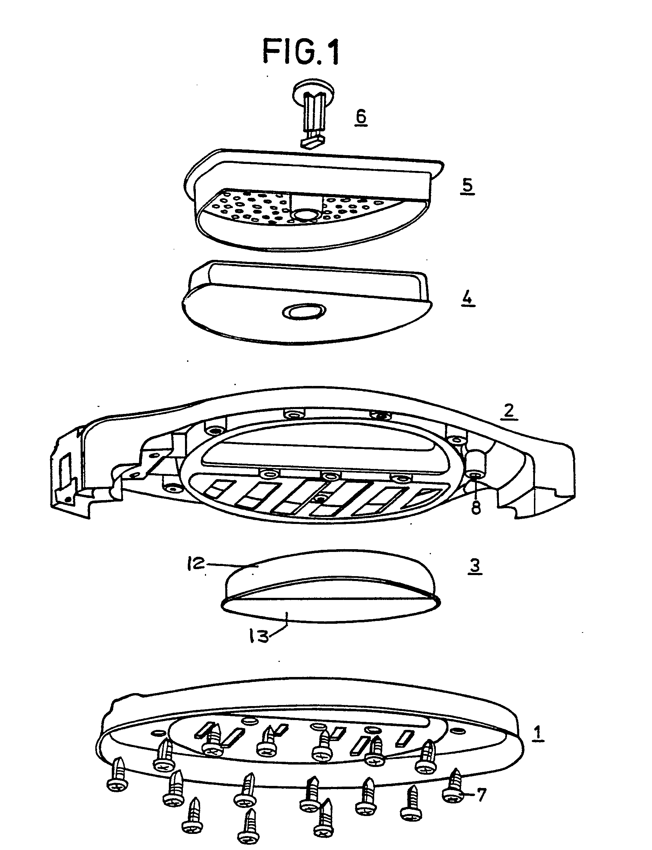

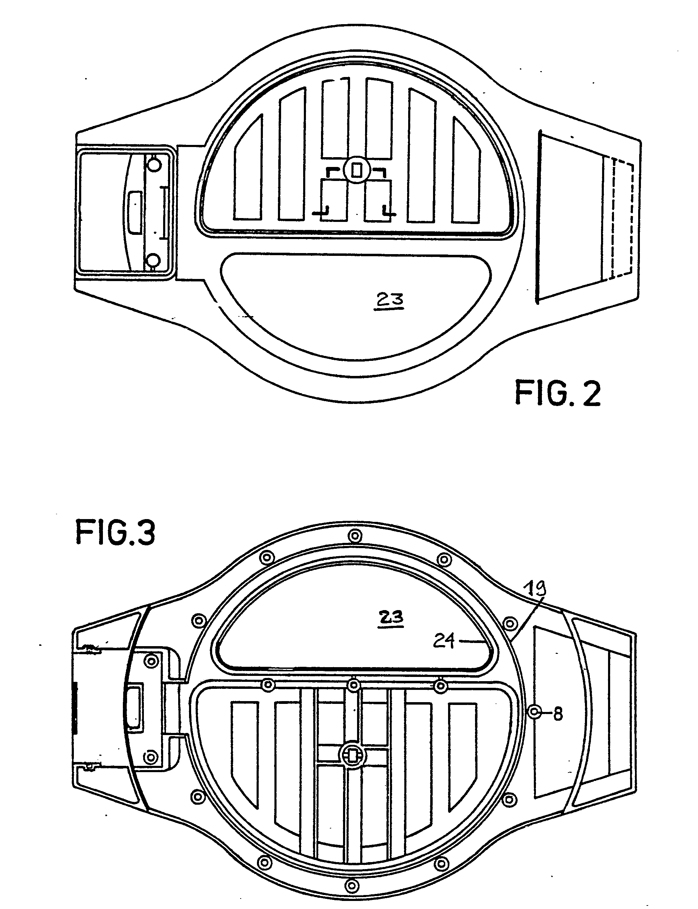

En se référant à la Fig. 1, celle-ci montre une vue éclatée du couvercle et en particulier du couvercle métallique proprement dit 1 surplombé d'un dessus de couvercle 2 en matière plastique, ces deux éléments, lorsqu'ils sont assemblés, emprisonnant un hublot transparent sous la forme de la coquille 3. Le dessus de couvercle 2 est adapté pour recevoir également, à sa partie supérieure, une cartouche de filtrage des odeurs 4 surmontée d'un capot 5 qui sera mis en place à l'aide d'un bouton 6 du type "quart de tour" pouvant être inséré dans des ouvertures en alignement pratiquées dans le capot 5, la cartouche filtrante 4 et le dessus de couvercle 2. Ce dernier est monté sur la couvercle 1 en emprisonnant le hublot 3 entre kes deux éléments, à l'aide de seize vis telles que 7 venant s'engager dans des trous filetés correspondants tels que 8 disposés dans le dessus de couvercle 2, les deux faces de ce dernier étant montrées aux Figs. 2 et 3.

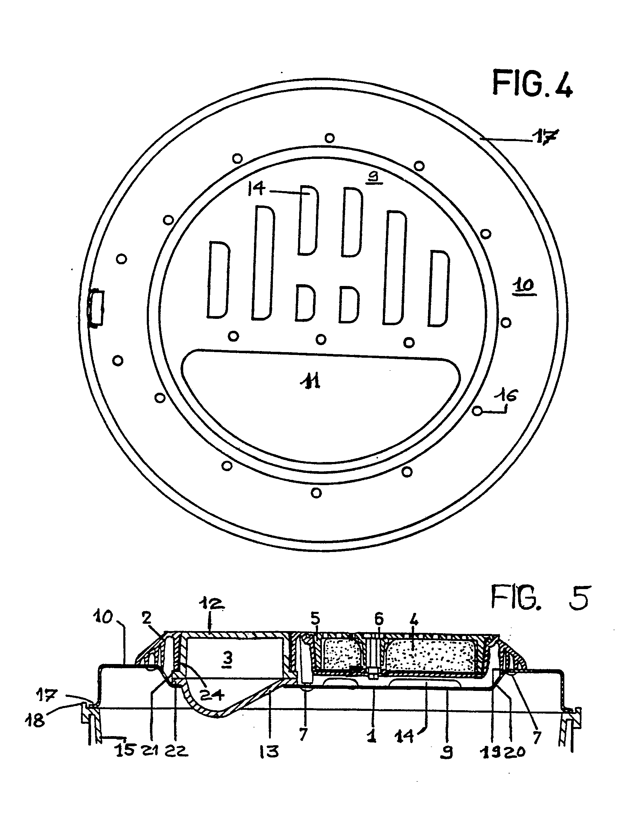

La Fig. 4 représente la face supérieure du couvercle métallique 1 dont la Fig. 5 donne une coupe diamétrale suivant l'axe de symétrie vertical de la coquille 3 formant hublot et de la cartouche filtrante 4. La partie circulaire centrale 9 du couvercle 1 et qui se trouve plus bas que la couronne circulaire 10 est pourvue d'une ouverture en forme de segment II destinée au passage de la coquille 3 formant hublot, la Fig. 5 montrant la paroi horizontale 12 de la demi-coquille supérieure et la paroi 13 bombée vers le bas de la demi-coquille inférieure. Huit autres ouvertures sous forme d'ouïes telles que 14 sont également prévues dans le segment restant de la partie circulaire centrale 9. Elles sont destinées à permettre le passage des vapeurs et fumées provenant de la cuve 15 de la friteuse vers le dessus du couvercle 1 et plus particulièrement le dessus de couvercle 2 dans lequel est logée la cartouche filtrante 4. Le couvercle métallique 1 est encore percé de seize trous tels que 16 pour permettre le passage des vis de fixation telles que 7 permettant de solidariser le dessus de couvercle 2 sur le couvercle 1.

Comme le montre la Fig. 5, le rebord extérieur 17 du couvercle 1 vient reposer à plat sur le rebord horizontal supérieur de la cuve 15 de la friteuse, immédiatement à l'intérieur de rebord vertical 18 de celle-ci. A l'intérieur de ce rebord 18, le long de la paroi verticale, on peut également prévoir une légère rainure (non montrée) dans la surface horizontale du rebord de la cuve afin d'assurer un bon contact thermique entre le couvercle métallique 1 et la cuve 15, cette dernière pouvant être en aluminium, en évitant un vide ou un joint entre le couvercle et la cuve.

Le dessus de couvercle en plastique 2 est encastré sur la partie supérieure du couvercle métallique 1, principalement par le rebord intérieur circulaire 19 qui est relativement mince et après fixation par les vis 7 se presse sur la partie annulaire inclinée 20 du couvercle 1 et qui constitue la transition entre la couronne supérieure 10 et la partie centrale 9.

Avant d'assembler le couvercle 1 et le dessus de couvercle 2, le hublot 3 sera placé entre ces deux éléments comme indiqué aux Figs. 1 et 5. Il est constitué par du Grilamid (marque) TR55 qui est un nouveau polyamide 12 de base aliphatique, cycloaliphatique et aromatique vendu par Emser Werke en Suisse sous forme de granulés convenant pour le moulage. Parmi les propriétés qui le rendent apte au but poursuivi ici, il y a évidemment sa transparence, sa résistance aux vapeurs d'eau, d'huile ou de graisse et aux températures relativement élevées rencontrées dans une friteuse. En ce qui concerne ces dernières, la température de ramollissement Vicat de ce polyamide 12 est de 157 degrés centigrade at sa température de transition de 160 degrés centigrade. L'Amidel (marque) nylon vendu par Union Carbide Corporation aux Etats-Unis est un équivalent.

Tant la demi-coquille supérieure dont la face plane 12 est au niveau de la face supérieure du dessus de couvercle 2 comme le montre la Fig. 5, que la demi-coquille inférieure dont la paroi 13 est bombée vers le bas, sont pourvues de rebords continus respectifs 21 et 22 épousant le même parcours ayant la forme d'un segment correspondant à l'ouverture 11 du couvercle 1 et à l'ouverture 23 du dessus de couvercle 2. Après moulage et avant le montage dans le couvercle, les deux demi-coquilles sont assemblées en une seule par soudage à ultra-sons des rebords 21 et 22. Le bombage de la demi-coquille inférieure est constitué par un plan incliné descendant à partir du côté droit du segment et situé au niveau du couvercle 1. Ceci facilite notamment la visibilité à travers les deux parois 12 et 13 vers l'intérieur et le centre de la friteuse, qui sera normalement utilisée comme elle se présente notamment à la Fig. 2 avec le hublot en avant et la filtre à odeurs à l'arrière.

La Fig. 5 indique que si la majeure partie du plan incliné de la demi-coquille inférieure est plane pour assurer une bonne visibilité à l'intérieur de la friteuse, l'inclination est plus abrupte sur la partie remontant vers le pourtour circulaire du segment délimité par l'ouverture 11 du couvercle 1.

Lorsque les aliments sont initialement plongés dans la friteuse, le couvercle étant fermé, la paroi interne 13 se couvrira initialement de buée mais celle-ci disparaîtra progressivement permettant ainsi de surveiller la cuisson, la paroi restant sensiblement à la température du couvercle 1.

Tandis que le rebord circulaire relativement mince 19 assure une bonne fermeture du dessus de couvercle 2 sur le couvercle 1 à l'endroit de la couronne oblique 20, un rebord plus épais 24 (Fig. 3) en forme de segment permet au dessus de couvercle 2 de coincer le hublot 3 sur le couvercle 1 par pression sur les bords soudés 21 et 22 des deux demi-coquilles constituant le hublot. Par cette construction, on assure ainsi l'étanchéité autour du hublot.

## Revendications

1. Appareil de cuîsson à couvercle (1) pourvu d'une partie transparente (3) comportant deux parois (12, 13) en regard disposées dans une ouverture (11) du couvercle de manière à obturer cette ouverture, caractérisé en ce que la partie transparente (3) présente la forme d'une coquille creuse fermée pourvue d'un rebord continu extérieur à l'enceinte formée par la coquille, ce rebord étant disposé sur le pourtour de la coquille et permettant de fiscer la coquille dans l'ouverture (11) du couvercle˙ (1).

2. Appareil de cuisson à couvercle selon 1, caractérisé en ce que la coquille est réalisée par l'assemblage de deux demi-coquilles, chacune fournissant une des parois (12, 13) et toutes deux étant pourvues d'un rebord extérieur (21, 22), les deux rebords étant montés face-à-face.

3. Appareil de cuisson à couvercle selon 1, caractérisé en ce que le couvercle (1) est surmonté d'un dessus de couvercle (2), tous deux avec des ouvertures (11, 23) permettant le montage de la coquille (3) en coinçant le rebord (21, 22) entre les bords des ouvertures.

4. Appareil de cuisson à couvercle selon 1, caractérisé en ce que tant la cuve (15) que le couvercle (1) de l'appareil sont métalliques et en contact direct sur le rebord (18) de la cuve pour assurer une bonne liaison thermique entre cette dernière et la paroi transparente inférieure (13) de la coquille.

5. Appareil de cuisson à couvercle selon 2, caractérisé en ce que les parois transparentes (12, 13) sont réalisées par le moulage des deux demi-coquilles en polyamide 12 de base aliphatique, cycloaliphatique et aromatique, transparent, résistant à la chaleur et aux vapeurs d'huile et de graisse, et sont soudées l'une à l'autre par ultra-sons.

6. Appareil de cuisson à couvercle selon 3 caractérisé en ce que la paroi supérieure transparente (12) de ladite coquille est horizontale et reliée au rebord (21) de la coquille par une paroi sensiblement verticale logée dans l'ouverture (23) en forme de cavité du dessus de couvercle (2) qui est pourvue d'un rebord vertical inférieur (24) presse sur la face supérieure de ce rebord (21) de la coquille.

7. Appareil de cuisson à couvercle selon 1, caractérisé en ce que la paroi inférieure (13) de la coquille (3) comporte un plan s'inclinant vers le bas en direction de la paroi de la cuve (15) de l'appareil suivie d'une partie incurvée remontant vers le bord de la cuve selon une pente plus raide que celle du plan incliné.

8. Appareil de cuisson à couvercle selon 7, caractérisé en ce que la coquille (3) occupe un segment de la surface circulaire du couvercle (1), le segment complémentaire étant occupé par un filtre à odeurs (4) et le plan incliné partant de la jonction entre les deux segments.

## Patentansprüche

1. Kochgerät mit einem Deckel (1), der einen durchsichtigen Teil (3) mit den beiden Wänden (12, 13) aufweist, wobei die beiden Wände einander gegenüberliegen und so in der Öffnung (11) des Deckels angeordnet sind, daß diese Öffnung ganz geschlossen ist, dadurch gekennzeichnet, daß der durchsichtige Teil (3) die Form einer geschlossenen, hohlen Muschel hat, die mit einem äußeren, endlosen Rand versehen ist, der am Umfang der Muschel angeordnet ist und der die Fixierung der Muschel in der Öffnung (11) des Deckels (1) ermöglicht.

2. Kochgerät mit Deckel gemäß Anspruch 1, dadurch gekennzeichnet, daß die Muschel durch Zusammenfügen der beiden Halbmuscheln verwirklicht ist, wobei die beiden Halbmuscheln die beiden Wände (12, 13) darstellen, jede Halbmuschel mit einem äußeren Rand (21 bzw. 22) versehen ist und die beiden Ränder (21, 22) aufeinander liegen.

3. Kochgerät mit Deckel gemäß Anspruch 1, dadurch gekennzeichnet, daß der Deckel (1) von einem oberen Deckel (2) überdeckt ist und beide Deckel Öffnungen (11, 23) aufweisen; die die Montage der Muschel (3) durch Pressen der Ränder (21, 22) zwischen die Kanten der Öffnungen ermöglichen.

4. Kochgerät mit Deckel gemäß Anspruch 1, dadurch gekennzeichnet, daß der Topf (15) und der Deckel (1) des Kochgeräts aus Metall bestehen und beide über den Rand (18) des Topfes (15) in direktem Kontakt miteinander sind, um einen guten thermischen Kontakt zwischen dem Topf und der unteren durchsichtigen Wand (13) der Muschel sicherzustellen.

5. Kochgerät mit Deckel gemäß Anspruch 1, dadurch gekennzeichnet, daß die beiden Wände (12, 13) durch Gießen der beiden Halbmuscheln aus einem Polyamid 12 Material mit einer aliphatischen, zyklo-aliphatoschen und aromatischen Basis verwirklicht sind, welches Material durchsichtig und gegen Hitze, Öldämpfe und Fettdämpfe widerstandsfähig ist, und daß die beiden Halbmuscheln durch Ultraschallschweißung miteinander verbunden sind.

6. Kochgerät mit Deckel gemäß Anspruch 3, dadurch gekennzeichnet, daß die obere durchsichtige Wand (12) der Muschel horizontal und mit dem Rand (21) der Muschel durch eine im wesentlichen senkrechte Wand verbunden ist, daß diese Wand (12) in der Öffnung (23), die als Höhlung im dem oberen Deckel (2) ausgebildet ist, untergebracht ist, wobei die Höhlung einen unteren vertikalen Rand (24) aufweist, der auf die obere Oberfläche des Randes (21) der Muschel drückt.

7. Kochgerät mit Deckel gemäß Anspruch 1, dadurch gekennzeichnet, daß die untere Wand (13) der Muschel (3) einen nach unten in Richtung zur Wand des Topfes (15) geneigten ebenen Teil aufweist, an den ein gebogener Teil anschließt, der zum Rand des Topfes steiler als der geneigte ebene Teil aufsteigt.

8. Kochgerät mit Deckel gemäß Anspruch 7, dadurch gekennzeichnet, daß die Muschel (3) ein Segment der kreisrunden Oberfläche des Deckels (1) und ein Geruchtsfilter (4) das komplementäre Segment einnimmt und daß der geneigte flache Teil an der Verbindungslinie zwischen den beiden Segmenten beginnt.

**Claims**

1. Cooking appliance with lid (1) provided with a transparent part (3) comprising two walls (12, 13) in front of one another arranged in an opening (11) of the lid so as to close this opening, characterized in that the transparent part (3) presents the shape of a hollow closed shell provided with a continuous rim external to the enclosure formed by the shell, this rim being arranged on the periphery of the shell and enabling to fix the shell in the opening (11) of the lid (1).

2. Cooking appliance with lid as in 1, characterized in that the shell is realized by the assembly of two half-shells, each providing one of the walls (12, 13) and both being provided with an external rim (21, 22), the two rims being mounted face to face.

3. Cooking appliance with lid as in 1, characterized in that the lid (1) is covered by an upper lid (2), both with openings (11, 23) enabling the mounting of the shell (3) by squeezing the rim (21, 22) between the edges of the openings.

4. Cooking appliance with lid as in 1, characterized in that both the vat (15) and the lid (1) of the appliance are made of metal and in direct contact on the rim (18) of the vat to ensure a good thermal contact between the latter and the lower transparent wall (13) of the shell.

5. Cooking appliance with lid as in 2, characterized in that the transparent walls (12, 13) are realized by the moulding of the two half-shells in a polyamide 12 material with aliphatic, cycloaliphatic and aromatic base which is transparent and withstands heat as well as oil and grease vapours, and are joined to one another by ultrasonic welding.

6. Cooking appliance with lid as in 3, characterized in that the upper transparent wall (12) of said shell is horizontal and connected to the rim (21) of the shell by a substantially vertical wall lodged in the opening (23) forming a cavity in the upper lid (2) which is foreseen with a lower vertical rim (24) pressing upon the upper surface of this rim (21) of the shell.

7. Cooking appliance with lid as in 1, characterized in that the lower wall (13) of the shell (3) comprises a flat part downwardly inclined in the direction of the wall of the vat (15) of the appliance followed by a curved part rising towards the rim of the vat in accordance with a steeper slope than that of the inclined flat part.

8. Cooking appliance with lid as in 7, characterized in that the shell (3) occupies a segment out of the circular surface of the lid (1), the complementary segment being occupied by an odour filter (4) and the inclined flat part start from the junction between the two segments.

# FIG.1

FIG. 2

FIG.3

FIG. 4

17
14
9
10
11
16

FIG. 5

10 2 12 5 6 4
3
24
17
18
7 1 14 9 13 20 7
15 21 22 13